(19) Europäisches Patentamt
European Patent Office
Office européen des brevets

(11) **EP 4 222 508 B1**

(12) **EUROPEAN PATENT SPECIFICATION**

(45) Date of publication and mention
of the grant of the patent:
**06.05.2026 Bulletin 2026/19**

(21) Application number: **21876117.9**

(22) Date of filing: **12.03.2021**

(51) International Patent Classification (IPC):
**G01V 1/30** *(2006.01)*     **G06T 17/00** *(2006.01)*

(52) Cooperative Patent Classification (CPC):
**G01V 1/301; G06T 17/00;** G01V 2210/57;
G01V 2210/641; G01V 2210/6652; G01V 2210/667

(86) International application number:
**PCT/TR2021/050220**

(87) International publication number:
**WO 2022/071898 (07.04.2022 Gazette 2022/14)**

(54) **METHOD OF DETERMINING BORING POINTS USING GEOSTATISTICAL INTERPOLATION METHOD**

VERFAHREN ZUR BESTIMMUNG VON BOHRPUNKTEN MITTELS GEOSTATISTISCHER INTERPOLATIONSVERFAHREN

PROCÉDÉ DE DÉTERMINATION DE POINTS DE FORAGE À L'AIDE D'UN PROCÉDÉ D'INTERPOLATION GÉOSTATISTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2020 TR 202015436**

(43) Date of publication of application:
**09.08.2023 Bulletin 2023/32**

(73) Proprietor: **Yilmaz, Ferdane
85757 Karlsfeld (DE)**

(72) Inventor: **Yilmaz, Ferdane
85757 Karlsfeld (DE)**

(74) Representative: **Genç Ilhan, Oznur
Istanbul Patent A.S.
Plaza 33, Buyukdere Cad. No: 33/16
Sisli
34381 Istanbul (TR)**

(56) References cited:
KR-A- 20200 058 258     KR-B1- 101 926 303
KR-B1- 101 927 659

• KIM MINGI ET AL: "A Three-Dimensional Geotechnical Spatial Modeling Method for Borehole Dataset Using Optimization of Geostatistical Approaches", KSCE JOURNAL OF CIVIL ENGINEERING, KOREAN SOCIETY OF CIVIL ENGINEERS, SEOUL, vol. 24, no. 3, 31 January 2020 (2020-01-31), pages 778 - 793, XP037019913, ISSN: 1226-7988, [retrieved on 20200131], DOI: 10.1007/S12205-020-1379-1
• THOMAS HERMANS ET AL: "Imaging artificial salt water infiltration using electrical resistivity tomography constrained by geostatistical data", JOURNAL OF HYDROLOGY, ELSEVIER, AMSTERDAM, NL, vol. 438, 14 March 2012 (2012-03-14), pages 168 - 180, XP028422013, ISSN: 0022-1694, [retrieved on 20120323], DOI: 10.1016/J.JHYDROL.2012.03.021

## Description

### TECHNICAL FIELD

The invention relates to the method of determining the boring points using the geostatistical interpolation method developed to determine the accuracy of the model created with digital systems (software platforms, etc.) on land, sea, space, and air (in the field of meteorology), particularly for tunnel and submarine projects.

### STATE OF THE ART

Soil properties have crucial importance in infrastructure projects. Ground models created using software platforms allow the visualization of underground properties based on geotechnical data in a digital environment. Such models constitute an important analysis factor in decision stages such as the examination of soil conditions, creation of efficient solutions, and determination of routes. Thanks to these models, engineers control all stages of the designed project digitally and decide on which regions additional boring activities will be implemented. However, it is not possible with the current technologies to model soil conditions in an accurate manner.

In the state of the art, different data are detected by means of sampling from various depths with boring activities on certain regions for the analysis of the condition of the underground layers. Digital ground models are created with such data. Digitally created models visualize soil conditions by means of using data acquired from geotechnical site investigations. This visualization is conducted with the use of existing platforms. Platform algorithms create layers between boreholes with the use of the information acquired from the ground investigation to identify areas of non-bored soil. The course of the created layers is constituted with the extrapolation method by the algorithms of the modeling systems. Said extrapolation may lead to uncertain areas that are not recognized and determined in the digital ground model.

Such uncertainty indicates unknown geological conditions and the unknown areas of the ground. Due to the natural variability of the soil structure and the inhomogeneity of the underground, the exact nature of the soil is unpredictable and uncertain. Due to the statistical deviation and spatial variability in digital models, the uncertainty ratio of the created model further increases. These uncertainties are termed epistemological uncertainties.

In the state of the art, a quantitative determination of the uncertain areas of the digital ground model is unavailable and the modeling platforms present no indication of how accurate the created digital model is. The program algorithms make use of simple mathematical functions or deterministic interpolation methods to create soil layers. As said methods create a model without examining the spatial correlations of the data, these are insufficient to indicate the uncertainties.

Software platforms only conduct the modeling and do not indicate the accuracy ratios, i.e., epistemic uncertainties, of the modeling. Hence, the planning based on the created digital model may be inaccurate. Such uncertainties regarding the ground properties pose a risk for engineers during the analysis. This may lead to high additional costs, damages, and even endangerment of human life. Therefore, the decision process and the planning are affected.

The identification of the risky areas in the digital ground model becomes an important problem to be solved due to the increasing use of software platforms and the formation of the decision stages based on the created ground model. Therefore, this invention has been developed using statistical methods to determine the accuracy of the digitally created ground model.

### DESCRIPTION OF THE INVENTION

In the related art, a study, Kim, M., Kim, HS. & Chung, CK. A Three-Dimensional Geotechnical Spatial Modeling Method for Borehole Dataset Using Optimization of Geostatistical Approaches. KSCE J Civ Eng 24, 778-793 (2020). https://doi.org/10.1007/s12205-020-1379-1 discloses a geotechnical three-dimensional spatial modeling was implemented using an optimized geostatistical interpolation approach at a bridge construction site in the south-central part of the Korean peninsula. The geotechnical investigation data were collected and standardized for the construction of a geo-database. For the site-specific stratification, a kriging-based integration of the geo-layers and the seismic velocity from a seismic refraction survey were applied. The value from a standard penetration test (SPT)-N of an uninvestigated location was predicted using parametric and nonparametric geostatistical methods. Three-dimensional spatial interpolations are accomplished using ordinary kriging, a sequential Gaussian simulation with a normal score transformed dataset, and a sequential indicator simulation using the geodatabase. A leave-one-out cross validation was carried out to quantitatively evaluate the reliability of the three-dimensional modeling. Finally, a three- dimensional geotechnical spatial model assigned with subsurface stratification and SPT-N values was constructed using the sequential Gaussian simulation.

The present invention relates to the method of determining the boring points using the geostatistical interpolation method to eliminate the aforementioned disadvantages and bring new advantages to the related field.

The invention relates to the method of determining the boring points using the geostatistical interpolation method, which recognizes the interaction between geological exploration data (soil types such as sand, clay, stone, etc.) and also has the ability to determine the uncertainties in digitally generated ground models.

The advantages of the method of determining the boring points by using the geostatistical interpolation method of the invention are as follows:

- It allows digitization and visualization of uncertainties in digital models using kriging interpolation. In this manner, comprehensive planning can be ensured and a model can be created by means of using geological features.
- Risky areas may be determined in geological models and boring activities can be performed on such areas.
- More than one boring position can be created virtually prior to the actualization of the boring activities; and the optimum spatial arrangement of the borings or the most suitable exploration fields can be found. Accordingly, the optimum route is determined with risk and cost minimization.
- The uncertainty ratios arising in the modeling are thusly determinable. Based on the determined uncertainties, additional boring works can be performed where necessary.
- With the optimal spatial arrangement of the boring points, the avoidance of costly site investigations and also risk minimization can be achieved.
- A saving of manpower as well as fast and planned work may be enabled.
- It indicates how uncertainties in digital ground models can be determined.
- Possible estimation errors can be determined with the applied method.
- Estimates can be provided for the determined areas and mapping for the risky areas can be enabled.
- By visualizing the risky areas and creating more than one virtual boring area, the most suitable exploration area can be found before the realization of actual boring activities. In this manner, the results can be compared, and thusly the optimum spatial arrangement of the borings may be applied with risk and cost minimization.
- The analysis of risky areas can be realized rapidly.
- Excessive use of the boreholes is an expensive and time-consuming process. In terms of economic efficiency, maximum knowledge can be acquired with minimum boring work and cost.

## DRAWINGS

Exemplary implementations of the present invention briefly summarized above and to be handled in detail below in accordance with one or more embodiments thereof are merely presented for explanatory purposes, and only exhibit some examples and/or embodiments of the invention.

Fig.-1 illustrates the flow chart of the process steps of the method of determining the boring points using the geostatistical interpolation method of the invention.

Fig.-2 representatively illustrates the boreholes and the observation point (voxel = the status of the digital ground model after being decomposed, a part thereof) for the method of determining the boring points using the geostatistical interpolation method of the invention.

Fig.-3 representatively compares the soil type at the observation point and the soil type at the measurement point of the method of determining the boring points using the geostatistical interpolation method of the invention.

Fig.-4 is a model illustrating the digital ground model as representatively divided into voxels (observation points) before the application of the kriging method in the method of determining the boring points using the geostatistical interpolation method of the invention.

Fig.-5 is a model representatively illustrating the uncertain areas of the digital ground model after the application of the kriging method in the method of determining the boring points using the geostatistical interpolation method of the invention. (The uncertainty ratios at these points are also obtained numerically.)

## DESCRIPTION OF DETAILS IN THE DRAWINGS

**A-** First Stage
**B-** Second Stage
**C-** Third Stage
**D-** Final Stage (Fourth Stage)
**1-** Comparison of the soil type at the observation point and the soil type at the measurement point
**1.1-** Presence of the same type of soil
**1.1.1-** In case of the presence of the same type of soil, the application of horizontal variogram
**1.2-** Presence of different types of soil

**1.2.1-** In case of the presence of different types of soil, the application of vertical variogram

**1.2.2-** In case of the presence of different types of soil, the application of horizontal variogram

**2-** Computation of all necessary regionalized variables ($z(x_i)$) for the kriging equation (creating a data set)

**3-** Creation of correlation matrices for the kriging interpolation

**3.1-** Computation of Matrix A correlation matrix

**3.2-** Computation of inverse Matrix A

**3.3-** Computation of vector d correlation matrix

**4-** Determination of the weighting factors of the regionalized variables

**5-** Plausibility check

**5.1-** Result of the sum of the weighting factors is 1 (one)

**5.1.A-** Result of the sum of the weighting factors is 1 (one), if not 1 (one)

**5.1.B-** Result of the sum of the weighting factors is 1 (one), if 1 (one)

**6-** Application of the kriging interpolation

**6.1-** Acquisition of the estimation error data that may arise during the interpolation

**6.1.A-** Computation of the kriging variance

**7-** Determination of the uncertainty probability at the observation point

**8-** Application of the performed operations on all voxels (observation points) in the model

**a-** Boreholes

**b-** Observation point (searched point) (voxel)

**X-** Darkareas

**Y-** Light areas

## DETAILED DESCRIPTION OF THE INVENTION

The invention relates to the method of determining the boring points using the geostatistical interpolation method, which recognizes the interaction between geological exploration data (soil types such as sand, clay, stone, etc.) and can also determine the uncertainties in digitally generated ground models.

The precision (in percentage) of the layers created between the boreholes has been determined by utilizing the kriging method in order to determine the uncertainties in digital ground models with the method of the invention.

Software platforms used in the state of the art automatically create layers between borings. A digital ground model is created when all the aforementioned layers are created. What should be taken into consideration here is that each observation point of said layers has a different uncertainty ratio. The determination of the uncertainty ratios at said points is not feasible with the existing methods.

Therefore, the following process steps of the method of the invention should be applied in order to determine the uncertainties of the observation points.

Before individually describing the process steps according to the method of the invention, a four-stage working procedure containing the process steps, in general, will be discussed for the determination of the uncertainty ratios at the observation points:

## First stage (A)

At this stage, regionalized variable values (data for creating measurement data sets) ($z(x_i)$) are computed. Since the regionalized variable $z(x_i)$ data required for the kriging method are not available, initially these data must be determined. The determination of such data is enabled by the application of a comparison method. In this comparison method, the boreholes (a), i.e., the known points, and the observation point (voxel) (b), which is cube-shaped and selected from a part of the layer automatically created by the software program are compared. Said comparison is realized based on the type of soil. The soil type at a selected observation point (b) is compared with the soil types at the entire measurement point.

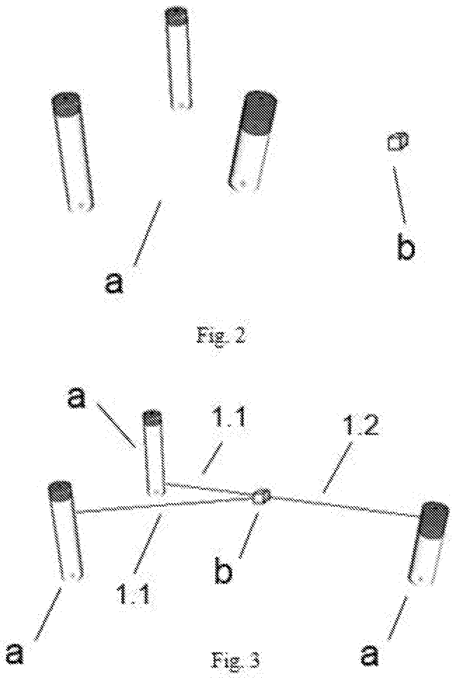

In Fig. 2, three boreholes (a) and the observation point (voxel (b)) are representatively illustrated. As a result of this comparison, it is determined which variogram model should be used. The result of the variogram models provides the mentioned data. In other words, $z(x_i)$ points (points where measurement data sets are created) required for the interpolation will be determined.

Variograms are generally functions that describe the spatial dependence level of a spatial random area or a regionalized process. By taking the coordinates of the samples into consideration, direction-based and distance-based changes are realized with the use of a variogram. In Figure 3, the soil type at the observation point (b) is compared with the soil types at the measurement point in the borehole (a) for the uncertainty ratio. If the same type of soil is present, the horizontal variogram application (1.1.1) is conducted only on the layer at the level of the observation point (b). The observation point should take regionalized value $z(x_i)$ merely from this layer.

If different types of soil are present as a result of the comparison (1.2), firstly the vertical variogram application (1.2.1) and then the horizontal variogram application (1.2.2) are conducted for the compared layers in the borehole.

Vertical variogram application (1.2.1) in case of the presence of different types of soil (1.2): the number of regionalized variables $z(x_i)$ can be determined using the measurement points and by developing alternative methods suitable for the soil type in the borehole. Some of these alternatives are as follows:

- The use of vertical variogram; the first alternative:

In case of the application of the vertical variogram; regionalized values $z(x_i)$ are taken from the layers of the compared borehole (a) for the observation point (b).

- The use of vertical variogram; the second alternative:

In case of the application of the vertical variogram; regionalized values $z(x_i)$ are taken from the widest lower layer and the widest upper layer of the compared borehole (a) for the observation point (b).

- The use of vertical variogram; the third alternative:

In case of the application of the vertical variogram; regionalized values $z(x_i)$ are taken from the widest lower layer, the widest upper layer, and the layer at the level thereof of the compared borehole (a) for the observation point (b).

- The use of vertical variogram; the fourth alternative:

In case of the application of the vertical variogram; one regionalized value $z(x_i)$ is taken from the widest lower layer of the compared borehole (a) for the observation point (b).

- The use of vertical variogram; the fifth alternative:

In case of the application of the vertical variogram; one regionalized value $z(x_i)$ is taken from the widest upper layer of the compared borehole (a) for the observation point (b).

- The use of vertical variogram; the sixth alternative:

In case of the application of the vertical variogram; regionalized values $z(x_i)$ are taken from the widest upper layer and the layer at the level thereof of the compared borehole (a) for the observation point (b).

- The use of vertical variogram; the seventh alternative:

In case of the application of the vertical variogram; regionalized values $z(x_i)$ are taken from the widest lower layer and the layer at the level thereof of the compared borehole (a) for the observation point (b).

Apart from the preferred alternatives above, different combinations can be created for the vertical variogram between the layers and the numbers and positions of the regionalized values $z(x_i)$ can be determined.

**Second stage (B)**

At this stage, the influence ratios of the regionalized variables $z(x_i)$ determined at the first stage on the observation point (voxel) (b) are determined. These influence ratios are termed weighting factors. Thusly, the weighting factors of the data will be determined.

The implementation of the invention is realized by creating variography and correlation matrices. The spatial correlation of the points is taken into consideration in order to determine the correlation matrices. The weighting factors required for the kriging interpolation are determined by creating the correlation matrices. A matrix equation is constituted with these matrices. Matrix A and vector d are required for this equation. Both are variogram-based matrices. Matrix A is inverted. When the inverted matrix A and vector d are inserted into the matrix equation, the weighting factors will be determined. Every regionalized variable has a weighting factor. For system check, it is checked whether the sum of the weighting factors is 1 (one) or not. If it is 1 (one), the third stage (C) proceeds in order to apply the kriging equation. If it is not 1 (one), the created matrices are rechecked.

**Third stage (C)**

At this stage, the uncertainty percentage of the observation point (b) is determined via the kriging equation. For this purpose, the known regionalized variable values are weighted and the target variable in the unknown position is estimated. Such weights determined in the second stage are multiplied by the regionalized variables (uncertainties) computed at the first stage and geostatistically provide the weighted average (i.e., the final uncertainty ratio) of the searched point (b). In addition to this point, the statistical estimation error (kriging variance) of the conducted kriging process is determined as well. The estimation error is parallel with the variogram model and the correct selection of the parameters required for the model.

All parameters required for the kriging equation are obtained from the first stage (A) and the second stage (B). At the first stage (A), the data, i.e., the regionalized variables $z(x_i)$, are determined. At the second stage (B), weighting factors ($\lambda_i$) of said data are determined. At the third stage (C), the result is obtained by the multiplication of the determined regionalized variables $z(x_i)$ and weighting factors ($\lambda_i$); that is, the value of the point $z(x_o)$ is determined using the surrounding regionalized values.

## General Kriging Equation:

$$z^*(x_0) = \sum_{i=1}^{n} \lambda_i z(x_i)$$

$z(x_i)$ is obtained for the first stage (A).
$\lambda_i$ is obtained for the second stage (B).
$z^*(x_0)$ is obtained for the third stage (C).

Thusly, the uncertainty ratio searched for the observation point (b) will be determined by taking the statistical average of the determined regionalized variables. For the purpose of system check, the kriging variance is taken as a basis at this stage as well. Thusly, the kriging equation will be solved.

At this stage, the exemplary system is related to the point estimation with the ordinary kriging method. The same stages can be adapted to the areal kriging method and areal predictions can be made accordingly.

Distance, the correlation between samples, and directional changes in the system are characterized by the variogram functions available in the kriging method. Therefore, the system developed using the method of the invention can be seamlessly adapted to any existing kriging method and variogram model. During such adaptation, the requisite conditions of the kriging method should be met. The process steps in the method of the invention can be applied to all kriging methods.

The system algorithm can adapt the spatial distance according to the method if necessary. When one- or two-dimensional computations are to be realized, the spatial distance between the points is adapted to the system in accordance with the used dimension.

**Fourth stage (D)**

It is the stage of the application of all operations on all voxels (observation points) (b) (8). The aforementioned first stage (A), second stage (B), and third stage (C) are individually applied on all voxels (observation points) (b).

The process steps in the method of the invention in Fig.-1 can be operated with their integration into any digital modeling system. Although the system algorithm creates layers between the boring points with the extrapolation method in the existing digital ground modeling systems, the accuracy ratios of these layers are unfortunately uncertain. In other words, the accuracy degree of the created model is unknown with the existing methods. With said process steps in the method of the invention, the determination of uncertainty ratios in the digital ground models has been accomplished.

With the method of the invention, the layers of the digitally created ground model are divided into small parts. These small parts represent the observation points (voxels) (b).

The process steps of the method of the invention are as specified below:

**Comparison of the soil type at the observation point and the soil type at the measurement point (1)**

This application is conducted for a part of the parted digital ground model (observation point (voxel) (b)). The parts for which the uncertainty ratio is to be determined are referred to as the observation point (b), and the parts in the borehole (a) are referred to as the measurement point.

To determine the uncertainty at the observation point (b), the soil type at the observation point (b) is compared with the soil type at all measurement points at the same level. The horizontal variogram is applied, if the soil type at the measurement point and the soil type at the observation point (b) are same; and firstly vertical and then horizontal variogram is applied, if they are not same (if different).

**Presence of the same type of soil (1.1)**

If the soil type at the observation point (b) and the soil type at the measurement point are same, the horizontal variogram is applied.

**In case of the presence of same type of soil, the application of horizontal variogram (1.1.1)**

In order to apply the horizontal variogram, firstly the variogram model is determined. As an example, regionalized variables are computed using the Gaussian Model. To this variogram function, the horizontal spatial distance, the range, and the sill are introduced, and the regionalized variable $z(x_i)$ is computed accordingly.

Variogram Model (Gaussian):

$$\gamma(h) = C\left(1 - exp\left[\frac{-h^2}{a^2}\right]\right)$$

$\gamma(h)$= variogram function
a= horizontal range
C= sill (determined as 100)
h= spatial distance

$$h = \sqrt{(x_i - x_j)^2 + (y_i - y_j)^2 + (z_i - z_j)^2}$$

i= measurement point coordinate
j= observation point coordinate

The distance at which the variogram reaches its sill is termed the range ("a"). The range indicates the length of correlation between the regionalized variables. When this distance is exceeded, the regionalized dependence on greater distances ends. The range in the horizontal direction, i.e., the correlation length, should be greater compared to the vertical direction.

If only horizontal variogram is applied between the points, the observation point (b) can take at most one regionalized variable $z(x_i)$ (from the layer at the same level) from the measurement point.

**Presence of different types of soil (1.2)**

If the soil type at the observation point (b) and the soil type at the measurement point are different, the horizontal variogram is applied after the application of the vertical variogram.

In addition to the horizontal soil analysis, the soil structure needs to be analyzed vertically as well.

In case of the vertical variogram application, the observation point (b) takes regionalized variables $z(x_i)$ from the measurement point in the compared borehole (a) with the same number as the number of the aforementioned vertical variogram usage alternatives.

**In case of the presence of different types of soil, the application of vertical variogram (1.2.1)**

The following variogram is firstly used to determine the regionalized variable value with the vertical variogram:

$$\gamma_{vertical}(h) = C_{vertical}\left(1 - exp\left[\frac{-h_{vertical}^2}{a_{vertical}^2}\right]\right)$$

$\gamma_{vertical}(h)$= vertical variogram function
$C_{vertical}$= sill for the vertical variogram
$a_{vertical}$= vertical range
$h_{vertical}$= vertical distance value and computed as follows:

$$h_{vertical} = |b - a|$$

b = distance from the point 0 of the coordinate z to the middle of the observation point
a = distance from point 0 of coordinate z to the middle of the measurement point

The parameter $a_{vertical}$ used in the formula indicates the vertical range. Since this parameter is focused on the vertical analysis of the soil in the boreholes, it is chosen much smaller than the parameter a used in the horizontal variogram. The reason for this is that the substrate is usually the same in horizontal soil examinations, whereas there is a continuous change due to its inhomogeneous structure in vertical soil examinations.

**In case of the presence of different types of soil, the application of horizontal variogram (1.2.2)**

After the application of the vertical variogram, the resulting value $\gamma_{vertical}(h)$ is inserted into the horizontal variogram formula as the sill value of the formula.

$$\gamma(h) = \gamma_{vertical}(h)\left(1 - exp\left[\frac{-h^2}{a^2}\right]\right)$$

a= horizontal range
$\gamma_{vertical}(h)$= C= sill
h= spatial distance

$$h = \sqrt{(x_i - x_j)^2 + (y_i - y_j)^2 + (z_i - z_j)^2}$$

i= measurement point coordinate
j= observation point coordinate

**Computation of all necessary regionalized variables ($z(x_i)$) for the kriging equation (creating a data set) (2)**

As a result of the applied vertical and horizontal variograms, all regionalized variables $z(x_i)$ coming from the measurement points to the observation point (b) will be determined. The value of the $z(x_0)$ point is determined using regionalized variables and the kriging interpolation according to the variogram parameters.

**Creation of correlation matrices for the kriging interpolation (3)**

The kriging method applies the interaction between samples by considering the coordinates of the samples. The regionalized dependence level of the examined property is determined using the variograms.
Direction-dependent changes and the distance are taken into consideration. Based on the distance of the determined regionalized variables to the observation point (b), it is computed how much influence the determined variable has on the observation point (b). This computation is realized by determining the weighting factors.
The weights are determined with spatial autocorrelation. The correlation matrices should be created for this purpose. These correlation matrices are: Matrix A and Vector d.

**Computation of Matrix A correlation matrix (3.1)**

In order to create the elements of Matrix A, firstly the distances between the used measurement points (spatial distances between known points) are computed.

$$h = \sqrt{(x_i - x_j)^2 + (y_i - y_j)^2 + (z_i - z_j)^2}$$

These computed distances should be inserted into the functions required for the kriging equation. These functions are termed variograms. Variograms are basic tools used for structural interpretation and estimation of phenomena. The variograms determine the influence of measurement points on the regionalized values and consist of various parameters.

Variogram models differ in their functional structures and include various theoretical approaches.

The process steps can be applied to all variogram models that can be used for the kriging interpolation (for example; Gaussian variogram, spherical variogram, linear variogram, logarithmic variogram, exponential variogram, tetraspheric variogram, pentaspheric variogram, etc.).

Variogram functions comprise different parameters such as sill, range, spatial distance between samples, etc. One of these parameters is the range. The range (correlation length) shows the spatial dependence distance between the respective data values. This is a statistical parameter and determines the correlation width between data. When the sill value is reached, the relationship between the data values disappears. Model parameters are inserted into the functions by ensuring the requisite model conditions.

In the applied step, Matrix A is created by computing the variogram $\gamma$ ($h_i$,$h_j$) values depending on the distance between the boreholes (a), i.e., the measurement points.

Each element of the matrix A consists of said variogram functions. After the distance between the measurement values (used boring layers) is computed; parameters such as the range, sill, etc., are determined and inserted into the variogram model, Matrix A takes the following form:

$$A = \begin{bmatrix} \gamma(h_1, h_1) \cdots \gamma(h_1, h_n) 1 \\ \vdots \quad \ddots \quad \vdots \quad \vdots \\ \gamma(h_1, h_n) \cdots \gamma(h_n, h_n) 1 \\ 1 \quad \cdots \quad 1 \quad 0 \end{bmatrix}$$

$$\gamma(h) = variogram$$

**Computation of inverse Matrix A (3.2)**

An equation should be constituted to determine the weighting factors. This equation is as follows:

$$A\lambda = d$$

In this equation, $\lambda$, i.e., the weighting factors, are searched. An inverse matrix A should be created to solve the equation:

$$A^{-1} = \begin{bmatrix} \gamma(h_1, h_1) \cdots \gamma(h_1, h_n) 1 \\ \vdots \quad \ddots \quad \vdots \quad \vdots \\ \gamma(h_1, h_n) \cdots \gamma(h_n, h_n) 1 \\ 1 \quad \cdots \quad 1 \quad 0 \end{bmatrix}^{-1}$$

$$\gamma(h) = variogram$$

**Computation of vector d correlation matrix (3.3)**

In order to create the elements of vector d, the distances between the measurement points and the observation point are computed according to the following formula:

$$h = \sqrt{(x_i - x_j)^2 + (y_i - y_j)^2 + (z_i - z_j)^2}$$

These computed distances are inserted into the variogram functions selected for the kriging equation with the parameters such as range, sill, etc. Vector d is created by computing the variogram $\gamma(h_i, h_0)$ values depending on the distance between the voxel (b) and the measurement points.

Variogram results are the elements of vector d. Vector d:

$$d = \begin{bmatrix} \gamma(h_1, h_0) \\ \cdots \\ \gamma(h_n, h_0) \\ 1 \end{bmatrix}$$

**Determination of the weighting factors of the regionalized variables (4)**

The following equation is created to determine the weighting factors required for the kriging interpolation:

$$A^{-1}d = \lambda$$

After all the correlation matrices required to solve the equation are determined by the steps above; the inverse of the matrix A is multiplied by the vector d. In this way, the desired weights are obtained.

$$\begin{bmatrix} \gamma(h_1, h_1) & \cdots & \gamma(h_1, h_n) & 1 \\ \vdots & \ddots & \vdots & \vdots \\ \gamma(h_1, h_n) & \cdots & \gamma(h_n, h_n) & 1 \\ 1 & \cdots & 1 & 0 \end{bmatrix}^{-1} \begin{bmatrix} \gamma(h_1, h_0) \\ \cdots \\ \gamma(h_n, h_0) \\ 1 \end{bmatrix} = \begin{bmatrix} \lambda_1 \\ \vdots \\ \lambda_n \\ \mu \end{bmatrix}$$

$\mu$ = Lagrange parameter
$h_0$ = estimation point
$h_{1-n}$ = measurement points
$\gamma(h)$ = variogram value
$\lambda_i$ = Lambda = weighting factors

As a result of this multiplication, the weighting factors of all regionalized variables will be determined. The resulting vector is called the weighting vector/lambda vector.

**Plausibility check (5):**

The weighting factors to be assigned to the regionalized variables in the kriging method are determined such that the variance of the prediction errors is minimized. For this reason, the sum of the weighting factors is supposed to be equal to 1 (one).

**Result of the sum of the weighting factors is 1 (one) (5.1)**

In order to check the accuracy of the multiplication, the elements (weighting factors) of the resulting lambda vector are summed without the Lagrange parameter $\mu$. The result of the addition must be 1 (one).

**Result of the sum of the weighting factors is 1 (one), if not 1 (one) (5.1.A);**

If the result of the addition is not 1 (one), this indicates the occurrence of an error in the correlation matrices.

$$\sum_{i=1}^{n} \lambda_i \neq 1$$

The correlation matrices and the variograms must be rechecked.

**Result of the sum of the weighting factors is 1 (one), if 1 (one) (5.1.B);**

$$\sum_{i=1}^{n} \lambda_i = 1$$

If the result is 1 (one), the next step proceeds in order to apply the kriging equation.

**Application of the kriging interpolation (6)**

The kriging interpolation method uses the known data of the nearest points to estimate the unknown data of the surrounding points. It is the weighted average of the regionalized variables, with the most proper and objective assignment of the weighting factors. After the determination of the weights, the prediction value for each point is computed according to the following formula:

$$z^*(x_0) = \sum_{i=1}^{n} \lambda_i z(x_i)$$

n = number of points creating the model
$z^*(x_0)$= searched value
$z(x_i)$= determined regionalized variables
$\lambda$= Lambda= weighting factors computed for each $z(x_i)$ value to be used in the computation of $z^*(x_0)$
i= number of points from 1 to n

The kriging interpolation is used to determine the value of the $z(x_0)$ point according to the surrounding regionalized variables, the selected variograms, and the parameters of these variograms.
In order to apply the kriging interpolation, all determined regionalized variables ($z(x_i)$) should be individually multiplied with the weighting factors ($\lambda_i$). In this way, the weighted average of the regionalized variables will be determined with the statistical method.
The most important feature distinguishing the kriging interpolation from other methods is that a variance value can be computed for each estimated point or area. This variance value is the possible statistical error based on the known regionalized variable values.

**Acquisition of the estimation error data that may occur in the interpolation (6.1):**

**Computation of the kriging variance (6.1.A)**

Estimation errors may occur in the kriging interpolation. In order to determine the accuracy of the interpolation, this value should be as low as possible. If it is abnormally high, all steps must be rechecked and corrected. The accuracy of the conducted interpolation is parallel with the accurate selection of model parameters such as the variogram model, the range, and the sill.
The kriging variance of the interpolation point is computed by the formula:

$$\sigma^2 = \mu + \sum_{i=1}^{n} \lambda i \, \gamma(h_1, h_0)$$

$\sigma^2$ = kriging variance

$\lambda_i$ = weighting factors/elements of the lambda vector

$\gamma(h_1,h_0)$ = elements of vector d

$\mu$ = Lagrange parameter, the last element of weighting factors/lambda vector

**Determination of the uncertainty probability at the observation point (7)**

After the application of the kriging process, the final statistical uncertainty will be determined for the observation point (voxel) (b).

In other words, the uncertainty ratio in the observation point (b) is determined with statistical averaging of all regionalized variables.

**Application of the conducted operations on all voxels (observation points) in the model (8)**

This operation is applied to all voxels (observation points) (b). For all voxels (b), the values that need to be computed at the stages or in the process steps must be individually inputted into digital computation programs, or an algorithm system must be created for stages or process steps. If the uncertainty ratio $(z(x_0))$ of the computed values in the dark black parts of the model is high, the following boring works can be performed on the dark areas (X). Light areas (Y) are risk-free areas. It is representatively illustrated in Fig.-5.

The process steps of the method of the invention may be applied as an extra module in all sorts of digital modeling systems or by creation of a new system.

Geological soil conditions have a significant influence on infrastructure projects. The variability of soil properties affects the decision stage. In order for engineers to make reliable planning, geological features must be transformed into models created with a comprehensive software platform. Otherwise, it may result in high costs and risky situations in terms of human life.

With these process steps of the method of the invention, it is rendered possible to determine the accuracy ratio of the course of the soil layers created with the algorithm. Thusly, uncertain areas can be determined together with the percentages thereof. In connection with the inhomogeneous substrate, the uncertainties that arise during the modeling process affect the decision process and the planning.

With the method of the invention, a part of the digitally modeled ground model layer is examined as the observation point (voxel) (b). The intended target of this examination is the determination and visualization of the uncertainty ratio of the computer-generated ground model.

With the method of the invention, the entire ground model created for the implementation of the entire system is required to be divided into voxels (observation points) (b). For each voxel (observation point) (b), the process steps described above are individually applied and the percentage ratio is outputted. Thusly, risky areas may be analyzed rapidly. Research can be done by conducting a boring activity, where necessary. Thusly, the optimum route is determined, and the building process continues with time and cost minimization.

The method of the invention may be applied using different digital modeling systems as well. Furthermore, it can be integrated into the existing digital modeling systems as an additional module.

The method of the invention creates more than one virtual boring area with the indication of risky areas and determines the most appropriate search field before the realization of actual boring activities. In this manner, the results can be compared, and the optimum spatial arrangement of the borings may be applied with risk and cost minimization.

The method of the invention may be used on land, sea, space, and air (in the field of meteorology), particularly for tunnel and submarine projects.

**Claims**

1. A computer implemented method of determining the boring points using the geostatistical interpolation method, **characterized in that** it comprises the process steps of:

   • comparing a soil type at an observation point (b) which is a part of a digitally generated ground model layer and a soil type at all measurement points of boreholes (a) which are at a same level with the observation point (b) of the digitally generated ground model (1);
   • in case of presence of the same soil type (1.1), applying a horizontal variogram (1.1.1);
   • in case of presence of different soil types (1.2), firstly applying vertical variogram (1.2.1) and then applying horizontal variogram (1.2.2);
   • computing all necessary regionalized variables $(z(x_i))$ for a kriging equation in order to create a data set (2);

• creating correlation matrices for a kriging interpolation (3) by computing a Matrix A correlation matrix (3.1), inverse of the Matrix A (3.2) and vector d correlation matrix (3.3);
• determining of weighting factors of regionalized variables (4)
• in order to check plausibility (5), check whether result of sum of the weighting factors is 1 (one) (5.1);
• if the result of sum of the weighting factors is not 1 (one) (5.1.A), checking the correlation matrices;
• if the result of sum of the weighting factors is 1 (one) (5.1.B), applying the kriging interpolation (6);
• in order to acquire an estimation error data that may occur in the interpolation (6.1), computing a kriging variance (6.1.A);
• determining an uncertainty probability at the observation point (b) (7);
• determining uncertainties for all observation points (b) of the digitally generated ground model (8).

2. A computer implemented method according to claim 1 **characterized by** a step of, in case of the presence of different soil types (1.2), using the resulting value of the vertical variogram as a sill value for the following application of the horizontal variogram.

## Patentansprüche

1. Ein computergestütztes Verfahren zur Bestimmung der Bohrpunkte unter Verwendung der geostatistischen Interpolationsmethode, **dadurch gekennzeichnet, dass** es die folgenden Verfahrensschritte umfasst:

• Vergleichen eines Bodentyps an einem Beobachtungspunkt (b), der Teil einer digital erzeugten Bodenmodellschicht, und eines Bodentyps an allen Messpunkten von Bohrlöchern (a), die sich auf gleicher Höhe mit dem Beobachtungspunkt (b) des digital erzeugten Bodenmodells (1) liegen;
• im Falle des Vorhandenseins desselben Bodentyps (1.1) Anwendung eines horizontalen Variogramm (1.1.1)
• bei Vorhandensein unterschiedlicher Bodentypen (1.2) zunächst Anwendung eines vertikalen Variogramm (1.2.1) und anschließend ein horizontales Variogramm (1.2.2);
• Berechnung aller erforderlichen regionalisierten Variablen ($z(x_1)$) für eine Kriging-Gleichung, um einen Datensatz (2) zu erstellen;
• Erstellen von Korrelationsmatrizen für eine Kriging-Interpolation (3) durch Berechnung einer Matrix-A-Korrelationsmatrix (3.1), der Umkehrung der Matrix A (3.2) und der Vektor-d-Korrelationsmatrix (3.3);
• Bestimmung der Gewichtungsfaktoren regionalisierter Variablen (4)
• zur Plausibilitätsprüfung (5), Überprüfung, ob das Ergebnis der Summe der Gewichtungsfaktoren 1 (eins) ist (5.1);
• wenn das Ergebnis der Summe der Gewichtungsfaktoren nicht 1 (eins) ist (5.1.A), Überprüfung der Korrelationsmatrizen;
• Wenn das Ergebnis der Summe der Gewichtungsfaktoren 1 (eins) ist (5.1.B), Anwendung die Kriging-Interpolation an (6);
• Um die Schätzfehlerdaten zu erhalten, die bei der Interpolation (6.1) auftreten können, Berechnung einer Kriging-Varianz (6.1.A);
• Bestimmung einer Unsicherheitswahrscheinlichkeit am Beobachtungspunkt (b) (7);
• Bestimmung der Unsicherheiten für alle Beobachtungspunkte (b) des digital generierten Bodenmodells (8).

2. Ein computerimplementiertes Verfahren gemäß Anspruch 1, **gekennzeichnet durch** einen Schritt, bei dem im Falle des Vorhandenseins verschiedener Bodentypen (1.2) der resultierende Wert des vertikalen Variogramms als Schwellenwert für die anschließende Anwendung des horizontalen Variogramms verwendet wird.

## Revendications

1. - Procédé mis en œuvre par ordinateur pour déterminer les points de forage à l'aide de la méthode d'interpolation géostatistique, **caractérisé par le fait qu'**il comprend les étapes de traitement consistant à :

- comparer un type de sol à un point d'observation (b) qui fait partie d'une couche de modèle de sol généré numériquement et un type de sol à tous les points de mesure de puits de forage (a) qui sont au même niveau que le point d'observation (b) du modèle de sol généré numériquement (1) ;
- en cas de présence du même type de sol (1.1), appliquer un variogramme horizontal (1.1.1) ;
- en cas de présence de différents types de sol (1.2), appliquer d'abord un variogramme vertical (1.2.1) puis appliquer un variogramme horizontal (1.2.2) ;
- calculer toutes les variables régionalisées nécessaires ($z(x_i)$) pour une équation de krigeage afin de créer un ensemble de données (2) ;
- créer des matrices de corrélation pour une interpolation de krigeage (3) par calcul d'une matrice de corrélation Matrice A (3.1), de l'inverse de la Matrice A (3.2) et de la matrice de corrélation de vecteur d (3.3) ;
- déterminer des facteurs de pondération des variables régionalisées (4) ;
- afin de vérifier la plausibilité (5), vérifier si ou non le résultat de la somme des facteurs de pondération est 1 (un) (5.1) ;
- si le résultat de la somme des facteurs de pondération n'est pas 1 (un) (5.1A), vérifier les matrices de corrélation ;
- si le résultat de la somme des facteurs de pondération est 1 (un) (5.1B), appliquer l'interpolation de krigeage (6) ;
- afin d'acquérir des données sur les erreurs d'estimation susceptibles de se produire lors de l'interpolation (6.1), calculer une variance de krigeage (6.1.A) ;
- déterminer une probabilité d'incertitude au point d'observation (b) (7) ;
- déterminer les incertitudes pour tous les points d'observation (b) du modèle de sol généré numériquement (8).

2. - Procédé mis en œuvre par ordinateur selon la revendication 1, **caractérisé par** une étape consistant à, en cas de présence de différents types de sol (1.2), utiliser la valeur résultante du variogramme vertical comme valeur de seuil pour l'application suivante du variogramme horizontal.

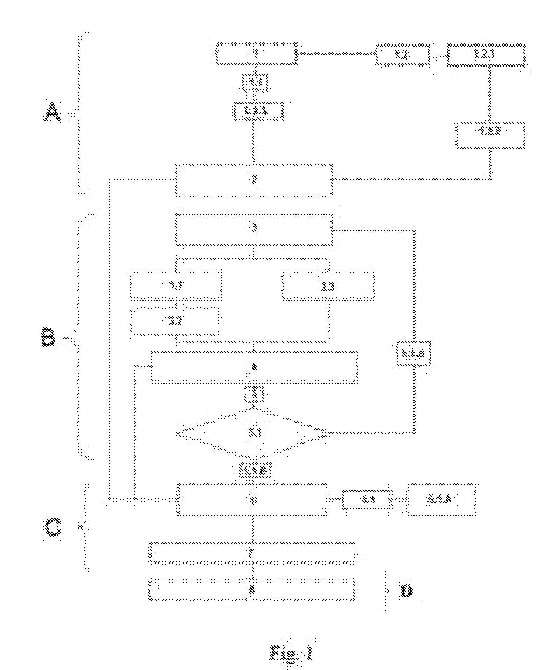

Fig 1

Fig. 2

Fig. 3

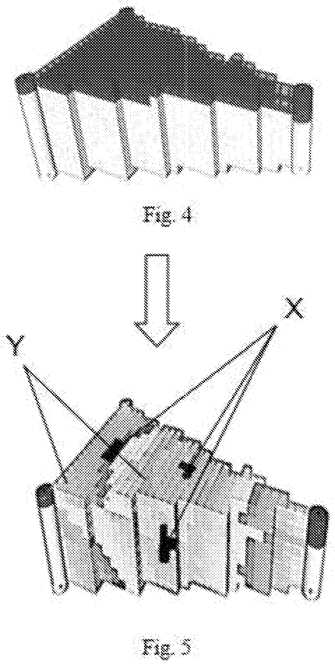

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KIM, M.** ; **KIM, HS.** ; **CHUNG, CK**. A Three-Dimensional Geotechnical Spatial Modeling Method for Borehole Dataset Using Optimization of Geostatistical Approaches. *KSCE J Civ Eng*, 2020, vol. 24, 778-793, https://doi.org/10.1007/s12205-020-1379-1